(19) Europäisches Patentamt
European Patent Office
Office européen des brevets

(11) Veröffentlichungsnummer: **0 101 087**
**B1**

(12) **EUROPÄISCHE PATENTSCHRIFT**

(45) Veröffentlichungstag der Patentschrift: **18.03.87**

(51) Int. Cl.⁴: **C 09 B 67/38**, C 09 B 67/06, D 06 P 1/613

(21) Anmeldenummer: **83108019.7**

(22) Anmeldetag: **12.08.83**

(54) **Pulverförmige, dispersionsstabile, bei der Applikation nicht schäumende Farbstoffzubereitungen und Verfahren zu deren Herstellung.**

(30) Priorität: **16.08.82 CH 4905/82**

(43) Veröffentlichungstag der Anmeldung:
**22.02.84 Patentblatt 84/8**

(45) Bekanntmachung des Hinweises auf die Patenterteilung:
**18.03.87 Patentblatt 87/12**

(84) Benannte Vertragsstaaten:
**CH DE FR GB IT LI**

(56) Entgegenhaltungen:
**DE-A-2 441 780**
**DE-A-3 229 920**
**FR-A-2 245 739**

**RESEARCH DISCLOSURE, Nr. 198, Oktober 1980, Seite 434, Nr. 19847, Havant, Hampshire, GB; "Non-ionic dispersing agents for aqueous dyestuff preparations"**

(73) Patentinhaber: **CIBA-GEIGY AG, Klybeckstrasse 141, CH-4002 Basel (CH)**

(72) Erfinder: **Putzar, Roland, Dr., In den Reben 69, CH-4114 Hofstetten (CH)**

(74) Vertreter: **Zumstein, Fritz jun., Dr., Dr. F. Zumstein sen. Dr. E. Assmann Dr. R. Koenigsberger Dipl.-Ing. F. Klingseisen Dr. F. Zumstein jun. Bräuhausstrasse 4, D-8000 München 2 (DE)**

**EP 0 101 087 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft neue Pulverförmige, dispersionsstabile, bei der Applikation nicht schäumende Farbstoffzubereitungen, die selbst unter HT-Bedingungen nicht zur Schaumbildung neigen, und mit denen man eine sprickel- und stippenfrei gefärbte Ware erhält.

Pulverförmige Zubereitungen von Dispersionsfarbstoffen enthalten vielfach anionaktive Dispergiermittel, wie Ligninsulfonate oder Formaldehyd-Kondensationsprodukte von Naphthalinsulfonsäuren sowie Tenside. Diese Zusätze verursachen des öfteren beim Färben in halbgefluteten Färbeapparaten ein starkes Schäumen der Flotte, was zu unegalen Färbungen führen kann.

Besonders störend macht sich die Schaumbildung in Jet-Färbeapparaten bemerkbar. Hier behindert der Schaum den Transport des Substrates durch die Düse und kann zum völligen Stillstand des Warentransports führen.

Zur Unterdrückung der Schaumbildung werden dem Färbebad üblicherweise vor oder während des Färbevorgangs verhältnismässig grosse Mengen Entschäumer zugesetzt. Abgesehen davon, dass diese Massnahme einen weiteren Verfahrensschritt bedingt, sind solche Zusätze unerwünscht. So können beispielsweise Entschäumer auf Silikonbasis zu einer Apparate- und Warenanschmutzung führen.

Ferner ist auch die Herstellung und Lagerung pulverförmiger Präparate von Dispersionsfarbstoffen mit Problemen verbunden. Derartige Farbstoffzubereitungen werden allgemein durch Zerstäubungstrocknen wässriger Dispersionen hergestellt. Bei der Trocknung tritt häufig, vor allem wenn der Farbstoffgehalt der trockenen Zubereitung bei und oberhalb von 40 Gew.% liegt, Agglomeration der feinverteilten Farbstoffteilchen ein. Derartige Agglomerate führen auf dem gefärbten Substrat zu Stippen oder Sprickeln und dadurch zu unbrauchbaren Färbungen.

Die Agglomeration der feindispersen Farbstoffteilchen lässt sich z.B. verhindern, indem man die Eingangstemperatur am Zerstäubungstrockner erniedrigt oder den Farbstoffgehalt relativ zum Hilfsmittel verringert, was eine geringere Raum-Zeit-Ausbeute bedingt.

Aus dem Research Disclosure, Nr. 198, Oktober 1980,Seite 434, Nr. 19847 sind desweiteren nichtionogene Dispergiermittel der Formel

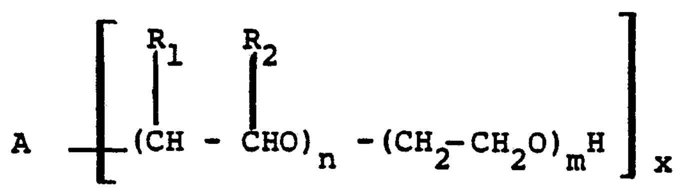

bekannt, wobei A den Rest einer organischen Verbindung mit einer Vielzahl reaktiver Wasserstoffatome und ein R von $R_1$ und $R_2$ Wasserstoff und das andere Alkyl mit 1-22 C-Atomen bedeuten; diese Dispergiermittel werden in wässrigen Farbstoffpräparationen verwendet, die ihrerseits im Ausziehverfahren, im Transferdruck sowie als Druckpasten im Textildruck eingesetzt werden können.

Aufgabe der vorliegenden Erfindung war es somit, ausgehend von wässrigen Farbstoffdispersionen durch Trocknung pulverförmige Farbstoffzubereitungen herzustellen, welche frei sind von Farbstoffagglomeraten und bei der Lagerung keine Agglomerate bilden, und ferner nicht schäumende Färbeflotten ergeben.

Es wurde gefunden, dass Farbstoffzubereitungen, die neben einem oder mehreren feinverteilten Dispersionsfarbstoffen, einem anionaktiven Dispergiermittel oder Dispergiermittelgemisch, zusätzlich 0,01 bis 10 Gew.%, bezogen auf das fertige Präparat, eines nichtionischen Umsetzungsproduktes von Aethylenoxid/Propylenoxid mit einem niedermolekularen aliphatischen Polyol enthalten, frei sind von den genannten Nachteilen, wobei das Umsetzungsprodukt einen Trübungspunkt im Bereich von -20 bis 130°C und ein Molgewicht von 200 bis 5'000 aufweist.

Als Alkoxylierungsprodukte kommen bevorzugt solche in Frage, die durch Reaktion von Aethylenoxid/Propylenoxid mit einem 2 bis 6 Kohlenstoffatome aufweisenden verzweigten oder unverzweigten Polyol erhalten werden.

Bevorzugte Polyole sind in erster Linie Aethylenglykol, Propylenglykol, Glycerin oder Pentaerythrit.

Die erfindungsgemässen Präparate enthalten bevorzugt solche Alkoxylierungsprodukte, deren Molgewicht im Bereich von 1'000 bis 3'000 liegt, und deren hydrophober Propylenoxidanteil den hydrophilen Aethylenoxidanteil überwiegt.

Durch ihre ausgeprägte Antischaumwirkung haben sich besonders solche Polyol-Alkoxylierungsprodukte bewährt, die bei einem Molekulargewicht von 1'000 bis 3'000 pro Mol Aethylenoxid ca. 3 Mol Propylenoxid enthalten.

Ferner werden vorteilhaft solche Alkoxylierungsprodukte verwendet, deren Trübungspunkt im Bereich von 0° bis 50°C liegt.

Auch Gemische von Umsetzungsprodukten verschiedener Polyole sind verwendbar. Diese Gemische erhält man durch einfaches Mischen einzelner Umsetzungsprodukte oder direkt durch Alkoxylierung eines Gemisches verschiedener Polyole.

Die Aethylen/Propylenoxid-Polyol Umsetzungsprodukte sind bekannt oder können nach an sich bekannten

Verfahren hergestellt werden (siehe z.B.: N. Schönfeldt, Grenzflächenaktive Aethylenoxid-Addukte; Wissenschaftliche Verlagsgesellschaft mbH, Stuttgart; 1976). Grundsätzlich kann zur Herstellung der Umsetzungsprodukte der Polyalkohol erst mit Aethylenoxid und dann mit Propylenoxid oder auch in umgekehrter Reihenfolge, erst mit Propylenoxid und dann mit Aethylenoxid umgesetzt werden. Mit Vorteil verwendet man solche Umsetzungsprodukte, die durch Reaktion des Polyalkohols mit Propylenoxid und anschliessendes Ankondensieren von Aethylenoxid erhalten wurden.

Bevorzugt enthalten die Präparate 0,05 bis 5 Gew.% an Alkoxylierungsprodukt, bezogen auf das fertige Präparat. Die Alkoxylierungsprodukte können den Zubereitungen aber auch in einer höheren Konzentration als 10 % beigemischt werden, sofern man nach der Trocknung pulverförmige Präparate von fester Konsistenz erhält, die keine Tendenz zum Zusammenbacken zeigen.

Derartige Alkoxylierungsprodukte wirken bei Anwendung der erfindungsgemässen Präparate in der Färbeflotte überraschenderweise als Schaumbrecher und verhindern gleichzeitig die Bildung von Farbstoffagglomeraten, sowohl bei der Herstellung, als auch Lagerung der Farbstoffzubereitungen.

Ferner wirken die Alkoxylierungsprodukte als Entstäubungsmittel, was sich positiv auf die Herstellung und Anwendung der erfindungsgemäsaen Präparate auswirkt.

Bei den in den Präparaten enthaltenen Dispersionsfarbstoffen handelt es sich vorwiegend um Azo- und Anthrachinon-, sowie um Nitro-, Methin-, Styryl-, Azostyryl-, Naphthoperinon-, Chinophthalon- oder Naphthochinonimin-Farbstoffe, die frei von wasserlöslich machenden Gruppen sind. Diese Farbstoffe bilden in feingemahlenem Zustand mit Hilfe von Dispergiermitteln sehr feine wässrige Suspensionen.

Unter Dispersionsfarbstoffen sollen auch wasserunlösliche optische Aufheller verstanden werden. Diese können verschiedenen Aufhellerklassen angehören; so handelt es sich beispielsweise um Cumarine oder Pyrazolinverbindungen.

Im übrigen ist es auch möglich, Gemische gleicher oder verschiedener Farbstofftypen sowie optischer Aufheller im definitionsgemässen Rahmen in den pulverförmigen Präparaten einzusetzen.

Anstelle von Dispersionsfarbstoffen können auch Farbstoffe aus anderen Klassen, z.B. Küpenfarbstoffe verwendet werden.

Als anionaktive Dispergiermittel kommen vor allem Ligninsulfonate in Betracht, z.B. solche, die nach dem Sulfit- oder Kraft-Verfahren gewonnen werden. Vorzugsweise handelt es sich um Produkte, die z.T. hydrolysiert, oxidiert oder desulfoniert bzw. im Fall des Kraft-Verfahrens nachsulfoniert oder sulfomethyliert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht zwischen 1000 und 80'000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren. Das Verhältnis von Kohlenstoff zu organisch gebundenem Schwefel liegt beispielsweise zwischen 9:1 und 55:1.

Bevorzugt werden solche Ligninsulfonate verwandt, die ein Verhältnis von Kohlenstoff zu organisch gebundenem Schwefel von 17:1 bis 40:1 aufweisen. Insbesondere haben sich die hydrophoberen hochtemperaturwirksamen Ligninsulfonate bewährt.

Als brauchbare anionaktive Dispergiermittel für die erfindungsgemässen Präparate haben sich ausserdem Kondensationsprodukte von aromatischen Sulfonsäuren mit Formaldehyd wie Kondensationsprodukte aus Formaldehyd und Naphthalinsulfonsäuren oder aus Formaldehyd, Naphthalinsulfonsäure und Benzolsulfonsäure, oder ein Kondensationsprodukt aus Rohkresol, Formaldehyd und Naphthalinsulfonsäure erwiesen. Genannt sind ferner sulfatierte Alkylenoxidaddukte, sulfatierte, partiell veresterte mehrwertige Alkohole, Alkylsulfonate, Natriumdialkylsulfosuccinate, Alkylbenzolsulfonate, Kondensationsprodukte aus Ditolyläther, Formaldehyd und Schwefelsäure, Kondensationsprodukte aus chlormethylolierten Diphenylen, Naphthalin und Schwefelsäure, aus einkernigen aromatischen Verbindungen, Formaldehyd, Naphtholsulfonsäuren und gegebenenfalls Natriumsulfit oder Kondensationsprodukte aus Naphthalin, Toluol, Formaldehyd und Schwefelsäure.

Bevorzugt werden Gemische der genannten anionischen Dispergiermittel angewandt.

Normalerweise liegen die anionischen Dispergiermittel in Form ihrer Alkalisalze, ihrer Ammoniumsalze oder ihrer wasserlöslichen Aminsalze vor. Vorteilhafterweise sollen elektrolytarme Qualitäten eingesetzt werden.

Die erfindungsgemässen Farbstoffpräparate enthalten insbesondere 25 bis 60 Gew.% und vor allem 30 bis 50 Gew.% eines oder mehrerer Dispersionsfarbstoffe, 30 bis 70 Gew.% eines anionaktiven Dispergiermittels oder Dispergiermittelgemisches und 0,1 bis 3 Gew.% eines der zu Anfang näher charakterisierten Alkoxylierungsprodukte.

Falls gewünscht können den Farbstoffpräparaten weitere eigenschaftsverbessernde Zusätze beigegeben werden, wie z.B. Bindemittel oder auch Gleitmittel, die den Warentransport beim Jet-Färben erleichtern. Ferner können neben den Alkoxylierungsprodukten auch andere nichtionogene Tenside zugesetzt werden, wie z.B. das 2,4,7,9-Tetramethyl-5-decyn-4,7-diol, das einerseits als Sprühhilfsmittel wirkt und zum anderen die Antischaumwirkung der erfindungsgemäss verwendeten Alkoxylierungsprodukte teilweise noch verstärkt.

Bevorzugte Farbstoffzubereitungen sind z.B.:

Präparate, enthaltend 30 bis 50 Gew.% des Dispersionsfarbstoffes der Formel

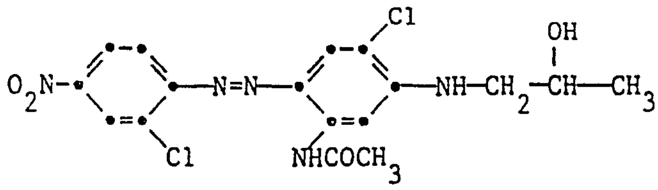

40 bis 60 Gew.% Ligninsulfonat, 1 bis 5 Gew.% Naphthalinsulfonat/Formaldehyd-Kondensationsprodukt und 0,1 bis 3 Gew.% nichtionisches Umsetzungsprodukt von Glycerin oder Propylenglykol mit Aethylenoxid/Propylenoxid (Verhältnis ~ 1:3) dessen Molgewicht ca. 2'000 beträgt; oder Präparate, enthaltend 30 bis 50 Gew.% eines Dispersionsfarbstoffgemisches, das sich zusammensetzt aus Farbstoffen der Formel

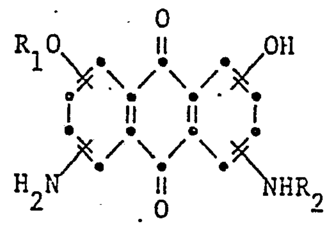

worin $R_1$ Wasserstoff bedeutet, wenn sich der Rest in α-Stellung befindet und Methyl, wenn sich der Rest in β-Stellung befindet, und $R_2$ ist Wasserstoff oder Phenyl, 40 bis 60 Gew.% Ligninsulfonat, 1 bis 5 Gew.% Naphthalinsulfonat/Formaldehyd-Kondensationsprodukt und 0,1 bis 3 Gew.% nicht-ionisches Umsetzungsprodukt von Glycerin oder Propylenglykol mit Aethylenoxid/Propylenoxid (Verhältnis ~ 1:3), MG ca. 2'000.

Die Herstellung der neuen pulverförmigen Farbstoffzubereitungen erfolgt beispielsweise dadurch, dass man einen oder mehrere Dispersionsfarbstoffe (zweckmässig als Rohfarbstoff) in Wasser mit mindestens einem der genannten anionaktiven Dispergiermittel und/oder dem nichtionogenen Hilfsmittel vermischt und nass vermahlt, was z.B. in einer Rührwerks-Kugelmühle oder Sandmühle erfolgt, bis die Teilchengrösse des heruntergemahlenen Dispersionsfarbstoffs geringer als 10 µm, insbesondere kleiner als 2 µm ist. Die restlichen Komponenten werden während oder auch erst nach dem Mahlprozess zugegeben.

Die so erhaltene Farbstoffdispersion wird getrocknet, so dass eine pulverförmige Zubereitungsform resultiert.

Geeignete Trocknungsaggregate sind Sprühtrockner, Dünnschichtkontakttrockner, wie z.B. Walzentrockner, kontinuierlich arbeitende Schaufeltrockner und andere; bevorzugt sind Sprühtrockner. Aufgrund der oberflächenaktiven Wirkung erniedrigt das erfindungsgemäss zugesetzte Alkoxylierungsprodukt bei Temperaturen unterhalb des Trübungspunktes die Oberflächenspannung der Farbstoffdispersion und erleichtert so deren Sprühtrocknung.

Es ist auch möglich, die flüssige Farbstoffdispersion direkt zu verwenden und als solche dem Färbebad zuzusetzen.

Ferner hat es sich gezeigt, dass es bei Farbstoffen, die nur wenig zur Agglomeration neigen, genügt, wenn das nichtionische Hilfsmittel nicht in das Präparat eingearbeitet wird, sondern in einem nachgeschalteten Arbeitsgang auf die pulverförmige Zubereitung aufgebracht wird, z.B. durch Aufsprühen.

Die neuen dispersionsstabilen Farbstoffzubereitungen, bei deren Verwendung man Färbebäder erhält, die auch unter HT- Bedingungen nicht schäumen, eignen sich zum Färben von organischem Material, insbesondere synthetischen Textilmaterialien nach kontinuierlicher oder diskontinuierlicher Verfahrensweise, wie z.B. solchen aus Cellulosetriacetat, synthetischen Polyamiden und insbesondere Polyester, wie Polyäthylenglykolterephthalat. Besonders geeignet sind die neuen Präparate zum Färben von Polyestergewebe in halbgefluteten Jet-Apparaturen.

Die nachfolgenden Beispiele dienen der Veranschaulichung der Erfindung; Prozente bedeuten Gewichtsprozente.

**Beispiel 1:**

40 g des roten Dispersionsfarbstoffes der Strukturformel

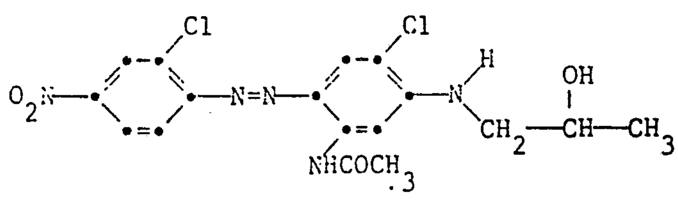

werden mit 51 g eines Ligninsulfonates, 3 g eines Naphthalinsulfonat/Formaldehyd-Kondensationsproduktes sowie 1 g eines Umsetzungsproduktes von Propylenglykol mit Aethylenoxid/Propylenoxid(Verhältnis ~ 1:3) dessen MG ca. 2'000 betiägt und 140 g Wasser in einer Attritormühle auf eine Teilchengrösse von etwa 1 bis 2 µm vermahlen.

Das resultierende Mahlgut ergibt nach der Sprühtrocknung bei 160°C Lufteintrittstemperatur und 85° C Austrittstemperatur ein gut in Wasser redispergierbares Pulver.

Setzt man diese Formulierung zum Färben von PES, nach dem HT-Ausziehverfahren in einem halbgefluteten Jet-Apparat ein, so erhält man eine rote, egale Färbung. Im Unterschied zu anderen Farbstoff-Präparaten, die unter Färbebedingungen schäumende Flotten ergeben, ermöglicht der Zusatz des Propylenglykol-propoxy-äthoxy-Kondensationsproduktes vor allem im kritischen HT-Bereich, schaumarmes Färben. Die Abwesenheit von Schäum ist eine für die Jet-Färberei wesentliche Voraussetzung, da nur so die Förderung des Substrates durch die Düse störungsfrei abläuft.

**Beispiel 2**:

42,4 g des dunkelblauen Dispersionsfarbstoffgemisches, das Farbstoffe der Formel

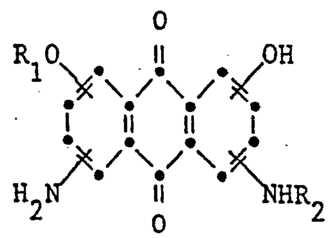

enthält, worin $R_1$ Wasserstoff bedeutet, wenn sich der Rest in α-Stellung befindet und Methyl, wenn sich der Rest in β-Stellung befindet, und $R_2$ ist Wasserstoff oder Phenyl, werden mit 49,1 g eines Ligninsulfonats, 3 g eines Naphthalinsulfonat-Formaldehyd-Kondensationsproduktes, sowie 0,5 g des im Beispiel 1 genannten Propylenglykolpropoxy-äthoxy-Kondensationsproduktes feingemahlen. Nach Sprühtrocknen der heruntergemahlenen Farbstoffdispersion erhält man eine pulverförmige, dispersionsstabile Farbstoffzubereitung.

**Beispiel 3**:

Der gelbe Küpenfarbstoff der Strukturformel

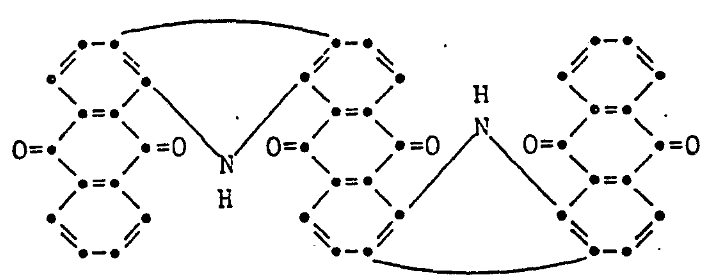

wird zusammen mit einem Ligninsulfonat durch Nassmahlen und anschliessendes Sprühtrocknen zu einem Pulver mit 33 %igem Farbstoffgehalt formuliert.

Durch Zumischen von 2 % des im Beispiel 1 genannten Propylenglykol-Alkoxylierungsproduktes, vor oder nach der Trocknung, erhält man ein staubarmes in der Applikation wenig schäumendes Produkt, welches in schnellaufenden Färbeapparaten keinen störenden Schaum verursacht. Die Färbungen fallen egal aus.

**Beispiel 4**:

500 g Polyestergewebe werden in einem halbgefluteten Labor-Jetfärbeapparat gefärbt, wobei die Färbeflotte 10 g des Farbstoffpräparates gemäss Beispiel 1 enthält. Während des gesamten Färbevorganges,

insbesondere auch im HT-Bereich, kommt es im Färbeapparat zu keiner nennenswerten Schaumbildung. Nach der Fertigstellung erhält man egale und reibechte rote Färbungen.

Verwendet man hingegen Farbstoffpräparate, die anstelle des definitionsgemässen Alkoxylierungsproduktes z.B. N-Oleyl-methyl-taurid oder ein Alkylphenoläthoxylat (z.B. Nonylphenol-pentadecaglykoläther) enthalten, so bildet sich in der Jetflotte Schaum und man erhält z.T. unegale Färbungen.

**Patentansprüche**

1. Pulverförmige, dispersionsstabile, bei der Applikation nicht schäumende Farbstoffzubereitungen, bestehend aus einem oder mehreren Dispersionsfarbstoffen und einem oder mehreren anionaktiven Dispergiermitteln, dadurch gekennzeichnet, dass diese Präparate zusätzlich 0.01 bis 10 Gew.%, bezogen auf das fertige Präparat, eines nichtionischen Umsetzungsproduktes von Aethylenoxid/Propylenoxid mit einem niedermolekularen, aliphatischen Polyol enthalten, wobei das Umsetzungsprodukt einen Trübungspunkt im Bereich von -20° bis 130° C hat und ein Molgewicht von 200 bis 5'000 aufweist.

2. Farbstoffzubereitungen nach Anspruch 1, dadurch gekennzeichnet, dass diese als Alkoxylierungsprodukt ein Umsetzungsprodukt von Aethylenoxid/Propylenoxid mit einem 2 bis 6 Kohlenstoffatome aufweisenden verzweigten oder unverzweigten Polyol enthalten.

3. Farbstoffzubereitungen nach Anspruch 2, dadurch gekennzeichnet, dass diese als Alkoxylierungsprodukt ein Umsetzungsprodukt von Aethylenoxid/Propylenoxid mit Aethylenglykol, Propylenglykol, Glycerin oder Pentaerythrit enthalten.

4. Farbstoffzubereitungen nach Anspruch 1, dadurch gekennzeichnet, dass diese ein Alkoxylierungsprodukt mit einem Molgewicht von 1'000 bis 3'000 enthalten, in dem der Propylenoxidanteil den Aethylenoxidanteil überwiegt.

5. Farbstoffzubereitungen nach Anspruch 4, dadurch gekennzeichnet, dass diese ein Alkoxylierungsprodukt mit einem molaren Aethylenoxid- zu Propylenoxidanteil von 1:3 enthalten.

6. Farbstoffzubereitungen nach Anspruch 1, dadurch gekennzeichnet, dass das in diesen enthaltene Alkoxylierungsprodukt einen Trübungspunkt aufweist, der im Bereich von 0° bis 50° C liegt.

7. Farbstoffzubereitungen nach Anspruch 1, enthaltend 0,05 bis 5 Gew.% Alkoxylierungsprodukt.

8. Farbstoffzubereitungen nach Anspruch 1, enthaltend 25 bis 60 Gew.% eines oder mehrerer Dispersionsfarbstoffe, 30 bis 70 Gew.% eines anionaktiven Dispergiermittels oder Dispergiermittelgemisches und 0,1 bis 3 Gew.% eines Alkoxylierungsproduktes, jeweils bezogen auf das fertige Präparat.

9. Farbstoffzubereitungen nach Anspruch 8, enthaltend 30 bis 50 Gew.% eines oder mehrerer Dispersionsfarbstoffe.

10.Verfahren zur Herstellung von Farbstoffzubereitungen nach Anspruch 1, dadurch gekennzeichnet, dass man eine wässrige Dispersion eines oder mehrerer Dispersionsfarbstoffe, enthaltend ein anionaktives Dispergiermittel oder Dispergiermittelgemisch, vor der Trocknung mit 0,01 bis 10 Gew.%, bezogen auf das fertige Präparat, eines nichtionischen Umsetzungsproduktes von Aethylenoxid/Propylenoxid mit einem niedermolekularen aliphatischen Polyol versetzt, wobei das Umsetzungsprodukt ein Molgewicht von 200 bis 5'000 aufweist und einen Trübungspunkt im Bereich von -20° bis 130° C hat.

11. Die mittels der Farbstoffzubereitungen nach Anspruch 1 gefärbten Textilmaterialien.

**Claims**

1. A powdered, stably dispersible dye formulation which does not foam on application and comprises one or more disperse dyes and one or more anionic dispersants, which formulation additionally comprises 0,01 to 10 % by weight, based on the final formulation, of a non-ionic reaction product of ethylene oxide and propylene oxide with a low molecular aliphatic polyol, said reaction product having a cloud point in the range from -20° to +130° C and a molecular weight in the range from 200 to 5000.

2. A dye formulation according to claim 1, wherein the alkoxylation product is a reaction product of ethylene oxide and propylene oxide with a branched or unbranched polyol which contains 2 to 6 carbon atoms.

3. A dye formulation according to claim 2, wherein the alkoxylation product is a reaction product of ethylene oxide and propylene oxide with ethylene glycol, propylene glycol, glycerol or pentaerythritol.

4. A dye formulation according to claim 1, which contains an alkoxylation product having a molecular weight in the range from 1000 to 3000 and in which the molar amount of propylene oxide is greater than that of ethylene oxide.

5. A dye formulation according to claim 4, which contains an alkoxylation product in which the molar ratio of ethylene oxide to propylene oxide is 1:3.

6. A dye formulation according to claim 1, wherein the alkoxylation product has a cloud point in the range from 0° to 50° C.

7. A dye formulation according to claim 1, which contains 0.05 to 5 % by weight of alkoxylation product.

8. A dye formulation according to claim 1, which contains 25 to 60 % by weight of one or more disperse dyes,

30 to 70 % by weight of an anionic dispersant or mixture of dispersants, and 0.1 to 3 % by weight of an alkoxylation product, in each case based on the final formulation.

9. A dye formulation according to claim 8, which contains 30 to 50 % of one or more disperse dyes.

10. A process for the preparation of a dye formulation as claimed in claim 1, which comprises adding 0.01 to 10 % by weight, based on the final formulation of a non-ionic reaction product of ethylene oxide and propylene oxide with a low molecular aliphatic polyol, before drying, to an aqueous dispersion of one or more disperse dyes containing an anionic dispersant or mixture of dispersants, said reaction product having a molecular weight of 200 to 5000 and a cloud point in the range from -20° to +130° C.

11. Textile material dyed with a dye formulation as claimed in claim 1.

**Revendications**

1. Préparations tinctoriales en poudre stables à la dispersion, non moussantes lors de leur application, constituées d'un ou de plusieurs colorants dispersés et d'un ou de plusieurs agents dispersants anioniques, caractérisées en ce que ces préparations contiennent en plus de 0,01 à 10% en poids, par rapport à la préparation finie, d'un produit non ionique de réaction des oxydes d'éthylène et de propylène avec un polyol aliphatique inférieur, ce produit de réaction présentant un point de trouble situé dans le domaine allant de -20 à 130° C, et une masse molaire située entre 200 et 5000.

2. Préparations tinctoriales conformes à la revendication 1, caractérisées en ce qu'elles contiennent, en tant que produit d'alcoxylation, un produit de réaction des oxydes d'éthylène et de propylène avec un polyol ramifié ou linéaire, présentant de 2 à 6 atomes de carbone.

3. Préparations tinctoriales conformes à la revendication 2, caractérisées en ce qu'elles contiennent, en tant que produit d'alcoxylation, un produit de réaction des oxydes d'éthylène et de propylène avec l'éthylèneglycol, le propylèneglycol, le glycérol ou le pentaérythritol.

4. Préparations tinctoriales conformes à la revendication 1, caractérisées en ce qu'elles contiennent un produit d'alcoxylation présentant une masse molaire située entre 1000 et 3000, et dans lequel la partie oxyde de propylène l'emporte sur la partie oxyde d'éthylène.

5. Préparations tinctoriales conformes à la revendication 4, caractérisées en ce qu'elles contiennent un produit d'alcoxylation présentant un rapport molaire de la partie oxyde d'éthylène à la partie oxyde de propylène de 1:3.

6. Préparations tinctoriales conformes à la revendication 1, caractérisées en ce que le produit d'alcoxylation qu'elles contiennent présente un point de trouble situé dans le domaine allant de 0 à 50° C.

7. Préparations tinctoriales conformes à la revendication 1, contenant de 0,05 à 5% en poids du produit d'alcoxylation.

8. Préparations tinctoriales conformes à la revendication 1, contenant de 15 à 60% en poids d'un ou de plusieurs colorants dispersés, de 30 à 70% en poids d'un agent dispersant ou mélange d'agents dispersants anionique(s), et de 0,1 à 3% en poids d'un produit d'alcoxylation, dans chaque cas par rapport à la préparation finie.

9. Préparations tinctoriales conformes à la revendication 8, contenant de 30 à 50% en poids d'un ou de plusieurs colorants dispersés.

10. Procédé de fabrication de préparations tinctoriales conformes à la revendication 1, caractérisé en ce que l'on ajoute, à une dispersion aqueuse d'un ou de plusieurs colorants dispersés, contenant un agent dispersant ou mélange d'agents dispersants anionique(s), avant le séchage, de 0,01 à 10% en poids, par rapport à la préparation finie, d'un produit non ionique de réaction des oxydes d'éthylène et de propylène avec un polyol aliphatique inférieur, ce produit de réaction présentant une masse molaire comprise entre 200 et 5000 et un point de trouble situé dans le domaine allant de -20 à 130° C.

11. Matériaux textiles teints à l'aide des préparations tinctoriales conformes à la revendication 1.